# FASCICULE DE BREVET EUROPEEN

(11) **EP 0 513 885 B1**
(45) Date de publication et mention de la délivrance du brevet: **03.09.1997**
(21) Numéro de dépôt: 92201099.6
(22) Date de dépôt: 21.04.1992
(51) Int. Cl.: G06K 7/06

(54) **Dispositif mixte de lecture et/ou d'écriture d'informations pour cartes à mémoire électronique**
Kombinierte Einrichtung zum Lesen/Schreiben von Informationen für elektronische Speicherkarten
Information Reading/Writing Combined Device for electronic memory cards

(30) Priorité: 17.05.1991 FR 9106053
(43) Date de publication de la demande: 19.11.1992
(73) Titulaire: SCHLUMBERGER INDUSTRIES, F-92120 Montrouge (FR)
(72) Inventeur: Rhelimi, Alain, F-78150 Le Chesnaye (FR)

(56) Documents cités:
- EP-A- 0 199 234
- EP-A- 0 329 557
- EP-A- 0 357 827
- DE-A- 3 505 130
- PATENT ABSTRACTS OF JAPAN vol. 12, no. 51 (P-667)(2898) 16 Février 1988 & JP-A-62 196 782

## Description

La présente invention a pour objet un dispositif mixte de lecture et/ou d'écriture d'informations pour cartes à mémoire électronique.

Les cartes à mémoire électronique sont bien connues. Par exemple, les brevets américains Nos. 4 625 102 et 4 737 620 délivrés au nom de Schlumberger Industries décrivent de telles cartes. Comme on le sait, ces cartes sont essentiellement constituées par un corps le plus souvent en matériau plastique de forme parallélépipédique rectangle dans lequel est implanté un module électronique. Ce module électronique est essentiellement constitué par des contacts externes électriques reliés à un circuit intégré solidaire des contacts électriques. Ce circuit intégré comporte un circuit mémoire et des circuits annexes.

Les figures annexées 1a et 1b montrent respectivement le recto et le verso d'une carte à mémoire électronique. Le recto 10a du corps de carte 10 montre les plages externes de contact électrique 12, par exemple au nombre de six, qui sont reliées, comme on l'a déjà indiqué, à la pastille semi-conductrice 14 du module électronique. Sur le recto 10a du corps de carte, on a également fait apparaître des graphismes 16 liés par exemple à l'émetteur de la carte ou à sa fonctionnalité et une zone 18 sur laquelle peuvent être imprimées des informations spécifiques au porteur de la carte. Sur le verso 10b du corps de carte, on a fait apparaître des pistes magnétiques 20, 22 disposées selon la longueur du corps de carte 10.

Pour de nombreuses applications, il est nécessaire de personnaliser la carte, c'est-à-dire d'introduire dans la mémoire du circuit intégré 14 une information spécifique au porteur de la carte, par exemple un numéro de code confidentiel. Dans de nombreux cas, il est intéressant lors de cette phase de personnalisation d'introduire également une information imprimée sur la zone 18 du recto 10a du corps de carte et une information de personnalisation enregistrée sous forme magnétique sur la piste 20. Par exemple, l'information imprimée dans la zone 18 sera le nom et le prénom du porteur de la carte inscrits sous une forme lisible. L'information de personnalisation stockée dans la piste magnétique 20 sera par exemple à nouveau le nom du porteur de la carte inscrit sous une forme codée binaire et/ou un numéro de code confidentiel du porteur de la carte déduit du code confidentiel mémorisé sous forme électronique par un algorithme pré-établi.

En d'autres termes, l'opération de personnalisation complète de la carte consiste à enregistrer dans la mémoire électronique 14 de la carte, sur la portion imprimable 18 du corps de carte, et sur la piste magnétique 20 de la carte une information de personnalisation, ces trois informations pouvant être bien sûr différentes mais toutes reliées de façon mutuellement bi-univoque.

On comprend également que, selon la nature des opérations qui pourront être effectuées avec une telle carte, il sera nécessaire de procéder à l'enregistrement effectif des informations sous les trois formes énoncées ci-dessus, ou bien seulement sous deux formes d'enregistrement, ces deux formes comportant toutefois nécessairement l'enregistrement électronique de l'information dans la mémoire du module électronique afin de sécuriser l'utilisation de la carte.

On comprend également qu'il est très important lors de l'opération de personnalisation, c'est-à-dire d'enregistrement des informations dans la carte sous ses différentes formes, qu'aucune erreur ne se produise. En effet, une telle erreur rendrait totalement inutilisable la carte ainsi personnalisée.

On comprend également que, lorsqu'on utilise des cartes portant les trois types d'informations, c'est-à-dire électronique, magnétique et imprimée, il est intéressant pour détecter d'éventuelles fraudes de s'assurer que les trois informations effectivement enregistrées dans une même carte sont cohérentes, c'est-à-dire qu'elles correspondent toutes les trois à un même et unique porteur. On voit que cette opération de vérification consiste dans le fait de lire les trois informations, ou éventuellement les deux informations, et de comparer les résultats de cette lecture.

Selon les techniques utilisées jusqu'à présent, la personnalisation complète d'une telle carte est effectuée à l'aide d'autant de machines qu'il y a d'informations à enregistrer, c'est-à-dire par au moins une machine d'écriture dans la mémoire électronique et une machine d'impression et/ou une machine d'enregistrement magnétique.

Une telle solution présente de nombreux inconvénients. Tout d'abord, elle nécessite la manipulation des cartes entre les différentes machines, ce qui risque d'introduire des erreurs dans l'enregistrement des informations à l'intérieur d'une même carte. En outre, les temps d'enregistrement sous forme électronique, magnétique et imprimée étant très différents, cela soulève des problèmes de gestion de files d'attente des cartes lors de leurs passages dans les différentes machines. Enfin, un tel ensemble est relativement volumineux et nécessite de nombreuses opérations. En conséquence, il n'est guère utilisable si l'opération de personnalisation doit se faire de façon unitaire, par exemple au guichet de l'organisme émetteur de la carte.

Le document DE-A-3 505 130 décrit un dispositif de lecture/écriture de données dans une carte comportant un module de mémoire électronique et/ou une piste magnétique. La divulgation de ce document porte essentiellement sur des moyens mécaniques permettant de réaliser, d'une part, la liaison électrique entre le module de mémoire électronique et un connecteur fixe, et, d'autre part, la mise en oeuvre de la tête magnétique. Ces moyens mécaniques sont tels que, lorsque la carte est introduite dans le dispositif, un ressort solidaire de la tête magnétique est contraint jusqu'à ce que la carte arrive en butée dans une position réalisant la liaison électrique module/connecteur et à partir de laquelle le ressort est relâché afin que la tête magnétique se déplace le long de la piste magnétique pour y lire ou inscrire des données.

Un objet de la présente invention est de fournir un dispositif mixte de lecture et/ou d'écriture d'informations dans une carte à mémoire électronique qui permette d'éviter tout risque d'erreur dans l'enregistrement des différentes informations relatives à une même carte et qui, de plus, soit adapté à une utilisation, par exemple au guichet d'une banque ou d'un organisme similaire.

Pour atteindre ce but, le dispositif mixte de lecture et/ou d'écriture d'informations dans une carte comprenant un circuit de mémoire électronique et au moins un parmi les deux supports d'enregistrement d'informations respectivement sous forme magnétique et sous forme imprimée, se caractérise comme défini dans la revendication 1.

On comprend que, grâce à l'invention, la carte ne subit aucune manipulation durant toutes les opérations d'enregistrement ou de lecture des différentes informations. En outre, les moyens d'enregistrement ou de lecture sont commandés simultanément par un même ensemble de traitement ; il n'y a donc pas de risque d'erreur dans l'enregistrement des informations relatives à une même carte ou dans la lecture de ces mêmes informations. De plus, les opérations d'enregistrement étant sensiblement simultanées, il ne se pose plus le problème de la gestion des files d'attente des cartes à personnaliser. Enfin, les deux ou les trois opérations d'enregistrement et/ou de lecture sont effectuées à l'aide d'une même machine, ce qui permet de réduire très sensiblement l'encombrement de l'installation nécessaire pour effectuer l'ensemble de ces opérations.

Selon un mode préféré de réalisation, le dispositif mixte de lecture et/ou d'écriture se caractérise en outre en ce que les moyens de supportage sont fixes en translation et comportent des moyens de guidage de la carte jusqu'à la position de traitement de la carte, position dans laquelle les plages externes de contact électrique de celle-ci sont en contact avec le connecteur électrique, et en ce que les deuxièmes moyens comportent un bâti, des moyens pour déplacer en translation le bâti selon la direction de la longueur de la carte, des moyens de lecture et/ou d'écriture d'informations imprimées solidaires du bâti et/ou des moyens de lecture et/ou d'écriture d'informations magnétiques solidaires également du bâti.

D'autres caractéristiques et avantages de l'invention apparaîtront plus clairement à la lecture de la description qui suit de plusieurs modes de réalisation de l'invention donnés à titre d'exemples non limitatifs. La description se réfère aux figures annexées sur lesquelles :
- les figures 1a et 1b, déjà décrites, montrent le recto et le verso d'une carte à mémoire utilisable dans l'invention ;
- la figure 2 est une vue de côté en élévation du dispositif mixte d'écriture et/ou de lecture ;
- la figure 3 est une vue du dispositif selon le plan de coupe vertical III-III de la figure 2 ;
- la figure 4 est une vue de dessus de l'ensemble du dispositif mixte de lecture et/ou d'écriture ; et
- la figure 5 est un schéma montrant les circuits de commande des différentes parties du dispositif d'écriture et/ou de lecture.

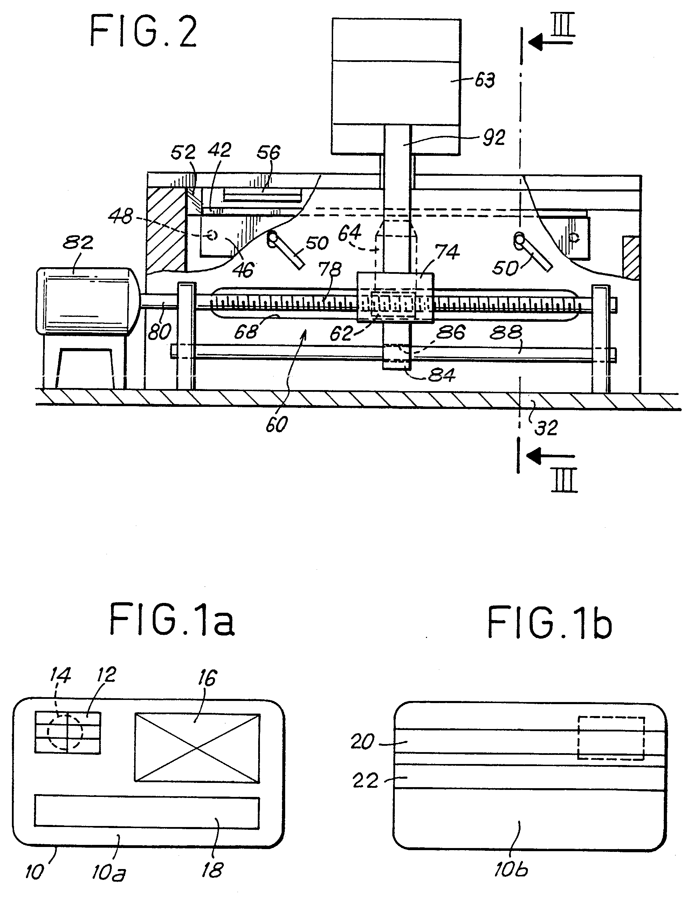

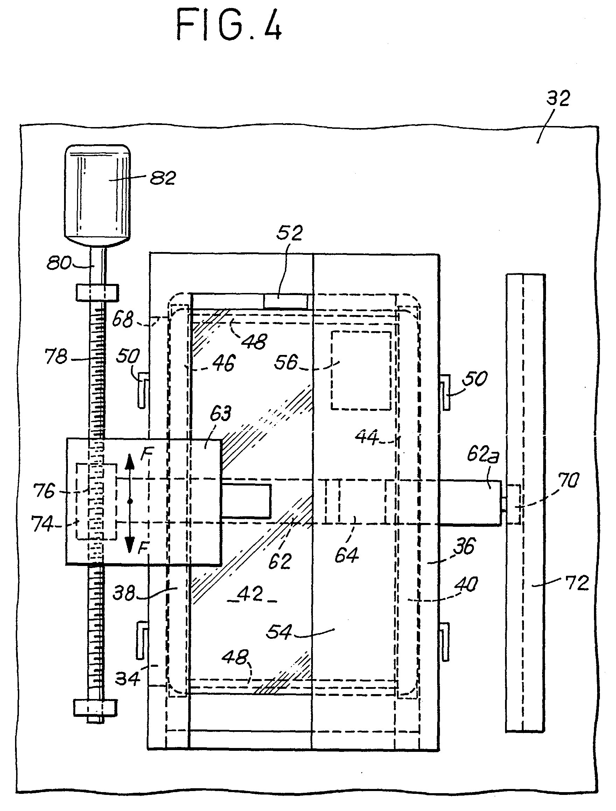

En se référant tout d'abord aux figures 2 à 4, on va décrire l'organisation générale d'un premier mode de réalisation de l'invention correspondant à un dispositif permettant l'enregistrement des informations simultanément sous forme électrique, magnétique et imprimée. Dans cette partie de la description, on appellera le dispositif un dispositif de personnalisation.

Le dispositif de personnalisation comprend un bâti fixe 30 constitué essentiellement par une plaque inférieure horizontale 32, par deux plaques latérales verticales 34 et 36 et par une plaque d'extrémité 38 également verticale. Les plaques latérales 34 et 36 se terminent, à leurs extrémités supérieures, par des rebords horizontaux supérieurs 38 et 40 dont la fonction sera explicitée ultérieurement. L'écartement entre les deux plaques latérales 34 et 36 est très légèrement supérieur à la largeur d'une carte à mémoire 42 et la longueur des plaques latérales est légèrement supérieure à celle de la carte à mémoire 42. A l'intérieur de l'espace limité par les plaques latérales 34, 36 et la plaque de fond 38 est monté un ensemble de fixation 43 de la carte constitué essentiellement par deux montants latéraux 44 et 46 reliés entre deux par des barres transversales telles que 48. L'ensemble de fixation constitué par les montants 44 et 46 peut être déplacé verticalement par l'intermédiaire de systèmes à parallélogramme 50 reliés aux montants latéraux par des tenons 45 traversant les plaques latérales 34 et 36 par des ouvertures verticales telles que 47. Plus précisément, les montants 44 et 46 peuvent être déplacés entre une position basse de repos qui permet l'introduction horizontale de la carte 42 entre lesdits montants et les rebords horizontaux 38 et 40 des plaques latérales et une position haute dans lesquelles les montants 44 et 46 pincent les bords longitudinaux de la carte 42 entre eux-mêmes et les rebords horizontaux 38 et 40, immobilisant ainsi la carte.

En outre, on comprend que les extrémités ouvertes des plaques 34 et 36 ainsi que les montants 44 et 46 en position basse définissent un couloir d'introduction de la carte 42 qui peut être glissée dans le bâti jusqu'à une position de traitement dans laquelle le bord avant 42a du corps de la carte vient en butée avec une butée mécanique de positionnement 52 qui peut être munie d'un micro-contact de détection. A la partie supérieure de la paroi latérale 36 est fixée une plaque support longitudinale 54 sensiblement horizontale qui s'étend sur un peu moins de la moitié de la distance séparant les deux plaques latérales 34 et 36. Sur la face inférieure de la plaque support 54 est montée une tête de connexion 56 qui est par exemple du type décrit dans le brevet américain No. 4 902 233 au nom de Schlumberger Industries. Comme cela est bien connu, la tête de connexion 56 est constituée par des lames flexibles présentant une extrémité libre, chaque extrémité venant au contact d'une des plages de connexion externe 12 de la carte 42. Chaque lame flexible est bien sûr reliée à un conducteur électrique non représenté sur les figures. Il va de soi que la tête de connexion 56 est disposée de telle manière qu'elle soit en regard des plages de contacts externes de la carte lorsque celle-ci est en position de traitement dans le dispositif de personnalisation.

On comprend que juqu'ici on a décrit un dispositif classique du type lecteur de carte à mémoire électronique à introduction manuelle.

Pour permettre l'enregistrement simultané d'informations sous forme magnétique et sous forme imprimée, le dispositif de personnalisation comporte en outre un ensemble mobile portant la référence générale 60. Cet ensemble mobile 60 comprend essentiellement une tête d'impression 63 disposée au-dessus de la carte 42 et une tête d'enregistrement magnétique 64 disposée en-dessous de la carte 42 et en regard des pistes magnétiques.

L'ensemble mobile 60 comprend une plaque mobile 62 qui traverse les plaques latérales 34 et 36 par des fentes longitudinales horizontales 66 et 68. Une première extrémité 62a de la plaque mobile 62 est munie d'un galet 70 qui coopère avec un rail de guidage longitudinal 72 parallèle aux plaques latérales 34 et 36. La deuxième extrémité 62b de la plaque mobile 62 est solidaire d'une pièce 74 formant chariot munie d'un taraudage 76. Ce taraudage 76 coopère avec une tige filetée 78 parallèle aux plaques 34 et 36. Cette tige filetée est accouplée à l'arbre de sortie 80 d'un micromoteur 82. On comprend qu'ainsi la rotation de l'arbre 78 sous l'effet de celle de l'arbre 80 du moteur 82 permet le déplacement en translation selon les directions F de la pièce 74 et donc de l'ensemble de la plaque mobile 62. La pièce 74 est prolongée par une pièce 84 munie d'un alésage 86 qui coopère avec une barre de guidage en translation 88. Ainsi, les déplacements de la plaque mobile 62 sont guidés d'une part par le rail de guidage et d'autre part par la barre de guidage 88, ce qui assure en même temps le supportage de l'ensemble mobile 60.

Comme on l'a déjà indiqué, l'ensemble mobile 60 est essentiellement constitué par une tête d'impression 63 et par une tête d'enregistrement magnétique 64. La tête d'enregistrement magnétique 64 est directement montée sur la plaque transversale 62 de telle manière que, lors des déplacements longitudinaux de l'ensemble mobile 60, la tête 64 se déplace le long de la totalité de la piste magnétique 20 de la carte à personnaliser.

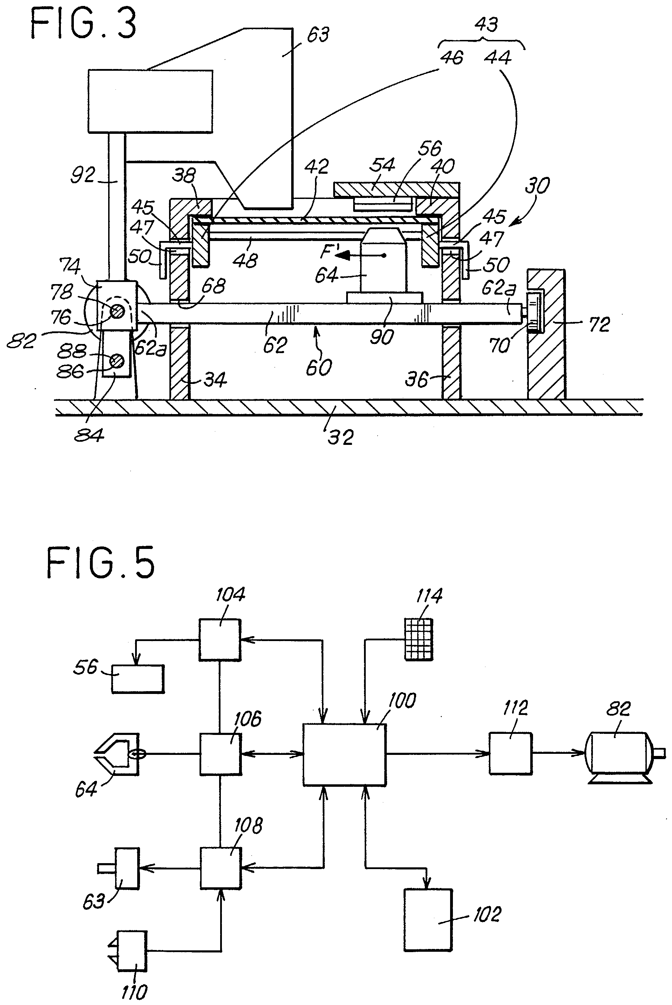

Selon une variante de réalisation correspondant au cas où la carte comporte deux pistes magnétiques 20 et 22, comme cela est indiqué sur la figure 1b, le socle 90 portant la tête d'impression magnétique 64 peut être montée sur la plaque transversale 62 par l'intermédiaire de mécanismes de déplacement selon la largeur de la plaque 62, non représentés sur la figure 3, qui permettent de faire passer la tête d'impression magnétique 64 de la piste 20 à la piste 22. Une variante consiste à prévoir une tête magnétique double.

La tête d'impression graphique 63 est portée par une potence verticale 92 montée sur la pièce 74. La tête d'impression graphique 63 est positionnée de telle manière que, lors du déplacement en translation de l'ensemble mobile 60, la tête d'impression graphique 63 décrive la totalité de la zone 18 d'impression graphique. L'homme de l'art comprend que la tête d'impression graphique 63 doit avoir une largeur adaptée à l'impression à réaliser. Selon la nature de cette tête d'impression, il pourra être indispensable de prévoir un mécanisme de déplacement de cette tête par rapport à la potence 92 selon la direction marquée par la flèche F afin que cette tête d'impression graphique puisse réaliser l'ensemble de l'impression dans la zone 18 lorsque celle-ci présente une largeur supérieure à la largeur de la tête d'impression. La tête d'impression peut être du type à jet d'encre ou encore du type thermique ou tout autre moyen d'impression convenable.

En outre, la plaque support 54 peut être raccourcie pour permettre une impression dans la zone 16 du corps de carte à l'aide d'un déplacement adapté de la tête d'impression graphique. De plus, les moyens d'impression peuvent comporter une deuxième tête d'impression disposée de l'autre côté du corps de carte, c'est-à-dire une tête d'impression portée par le montant 62 qui supporte déjà la tête magnétique 64.

En se référant maintenant plus particulièrement à la figure 5, on va décrire l'ensemble des circuits de commande de la machine de personnalisation décrite en liaison avec les figures 2 à 4. Cet ensemble de commande comporte une unité de traitement 100 essentiellement constituée par un microprocesseur associé à une mémoire de programmes 102 constituée par exemple par une PROM. Le microprocesseur 100 contrôle l'ensemble du fonctionnement de la machine et, en particulier, l'élaboration de l'ensemble des informations qui doivent être enregistrées sous forme électronique, magnétique et graphique. Le microprocesseur 100 commande d'une part un circuit de commande 104 du connecteur 56 pour contrôler les opérations d'écriture et, éventuellement, de lecture d'informations dans le circuit électronique de la carte 42. Les lecteurs de carte à mémoire électronique ainsi que leur circuit de commande sont bien connus. On peut citer en particulier les brevets américains US-A-4 902 233 et US-A-4 675 516 délivrés au nom de Schlumberger Industries. Le circuit de traitement 100 est également relié au circuit de commande 106 de la tête d'enregistrement magnétique 64. Comme on le comprend aisément, la tête d'enregistrement magnétique 64 peut également être commandée pour lire des informations magnétiques déjà enregistrées sur la piste 20. Selon une variante de réalisation, la tête magnétique 64 peut comporter en fait deux demi-têtes de lecture permettant l'écriture ou la lecture simultanées sur les pistes 20 et 22 de la carte à mémoire électronique.

Le circuit de commande 100 contrôle également le circuit 108 commandant la tête d'impression 63. En variante, la machine selon l'invention peut également comporter une tête 110 de lecture d'informations déjà enregistrées dans la zone 18 de la carte. Le circuit 108 gère alors à la fois les opérations d'écriture, par l'intermédiaire de la tête 63, et de lecture, par l'intermédiaire de la tête 110. On comprend que par enregistrement graphique il faut comprendre non seulement l'impression d'informations sous une forme directement lisible mais également l'impression et, éventuellement, la lecture d'informations enregistrées par exemple sous forme de code à barre.

Le circuit de commande 100 sert également à commander le déplacement de l'ensemble mobile 60, c'est-à-dire en fait le moteur 82, par l'intermédiaire du circuit de commande et d'alimentation 112. Dans le cas où la tête magnétique 64 et la tête d'impression 63 doivent comporter des possibilités de mouvement propre, le circuit de commande 112 sert également à commander les actuateurs spécifiques associés à chacun de ces deux mouvements. Ce circuit commande également, par des moyens non représentés, le mouvement d'élévation ou d'abaissement de l'ensemble de fixation 43 de la carte en position de traitement. Enfin, le circuit de traitement 100 est relié à un moyen 114 d'entrée d'informations constitué par exemple par un clavier alphanumérique. Une autre solution consiste à relier le circuit de traitement 100 à un système informatique, en remplacement du clavier 114. Le système informatique transmet alors au circuit 100 les informations de personnalisation. Ce dernier se contente alors de commander les moyens d'enregistrement (électronique, magnétique, graphique) pour que ces informations soient effectivement enregistrées dans les conditions prévues. Comme on le comprend aisément, le clavier 114 sert en particulier à entrer la ou les informations de personnalisation associées à une carte où les informations successives associées à une série de cartes qui seront personnalisées successivement.

On va maintenant décrire le fonctionnement de la machine dans le cas où elle sert à réaliser une personnalisation carte par carte.

Dans sa position initiale, l'ensemble de fixation 43 est en position basse. La carte 42 peut donc être introduite manuellement dans les éléments de guidage constitués par les pièces 38, 40 et 46, 44. La carte est insérée jusqu'à ce qu'elle arrive en butée sur la butée mécanique 52. Dans cette position de traitement, les plages de contact électrique externes 12 de la carte sont en liaison électrique avec les lames de contact du connecteur 56. Dans cette même position initiale, l'ensemble mobile est disposé à une des extrémités de la machine de personnalisation. L'opérateur, à l'aide du clavier 114, introduit le ou les éléments formant les informations de personnalisation. Selon un mode de mise en oeuvre, une information unique de personnalisation pour une carte est introduite à l'aide du clavier 114. A partir de cette information, le microprocesseur 100 en liaison avec la mémoire de programmes 102 élabore l'information et les signaux de commande à appliquer à la tête d'impression graphique 63, les informations numériques, par exemple constituées par un code confidentiel, qui doivent être enregistrées sous forme électronique dans le module électronique de la carte, ainsi que les informations qui doivent être enregistrées sous forme magnétique sur la piste 20.

Selon un mode préféré de mise en oeuvre, l'unité 100 est reliée à un système informatique qui transmet à l'unité 100 les informations de personnalisation. Dans ce cas, la machine de personnalisation se comporte comme un périphérique gérant les différents moyens d'enregistrement en fonction des normes ISO ou AFNOR relatives aux cartes électroniques et aux cartes magnétiques.

Une fois que ces opérations sont accomplies, on commande l'ensemble de fixation 43 pour que celui-ci soit relevé et immobilise la carte 42. Celà assure simultanément le positionnement de la face supérieure du corps de la carte par rapport à la tête d'impression 63. Puis, simultanément, le circuit de commande 104 du connecteur 56 reçoit les signaux qui vont permettre l'enregistrement de l'information électronique dans le circuit intégré de la carte ; le circuit de commande 106 de la tête magnétique 64 reçoit également les informations permettant l'enregistrement des données magnétiques et, enfin, le circuit de commande 108 reçoit les données correspondant à l'information graphique qui doit être enregistrée par la tête d'impression 63. Simultanément encore, l'unité de commande 100 provoque l'alimentation du moteur 82 par l'intermédiaire du circuit 112 permettant ainsi le déplacement de l'ensemble mobile 60 avec une vitesse contrôlée d'une extrémité à l'autre de la machine de personnalisation assurant ainsi un déplacement de la tête d'impression graphique et de la tête d'enregistrement magnétique sur sensiblement toute la longueur du corps de la carte à mémoire électronique 42. Lorsque l'ensemble de ces opérations est réalisé, le circuit 100 commande l'abaissement de l'ensemble de fixation 43 et le retour de l'ensemble mobile 60 à sa position initiale. Le préposé à la personnalisation des cartes peut alors procéder à l'extraction de celle-ci et à sa remise à son détenteur.

Un autre avantage de la machine selon l'invention consiste dans le fait que, lors de l'enregistrement magnétique, la carte est immobile et c'est la tête magnétique qui est déplacée. On évite ainsi les inconvénients liés aux galets ou courroies qu'on trouve habituellement dans de tels systèmes. La tête magnétique peut être entraînée de façon régulièrement et continue en contrôlant parfaitement sa vitesse de déplacement à l'aide du moteur 82.

Dans la description précédente, on a envisagé principalement le cas d'une machine de personnalisation, c'est-à-dire le cas d'un dispositif qui permet seulement l'enregistrement des informations de personnalisation sous forme électronique, magnétique et graphique. Il va de soi que l'on ne sortirait pas de l'invention si la machine permettait uniquement l'enregistrement de ces informations sous une forme électronique et sous une des deux formes constituées par l'enregistrement magnétique et l'enregistrement graphique.

On comprend également que la même machine peut servir non seulement à l'enregistrement de ces informations, mais également à la lecture de ces informations lorsque l'inscription a été réalisée. Comme on l'a indiqué précédemment, dans ce cas, la machine comporte une tête d'enregistrement magnétique 64 qui peut être également commandée en lecture d'information magnétique et une tête 110 de lecture d'information graphique. Cette tête de lecture 110 est bien sûr adaptée à la forme sous laquelle l'information graphique est imprimée, c'est-à-dire essentiellement sous forme littérale ou sous forme de code à barres. On peut remarquer que, dans le cas d'un dispositif de personnalisation, il est utile que la machine puisse lire les informations qui viennent d'être enregistrées afin de s'assurer que les informations effectivement inscrites sous formes magnétique, électronique et graphique sont identiques à celles qui devraient être inscrites. Celà permet de détecter une éventuelle défaillance d'un des dispositif d'enregistrement.

On comprend également qu'on ne sortirait pas de l'invention si la machine servait uniquement au contrôle de l'authenticité de carte ayant déjà subi l'opération de personnalisation. Dans ce cas, la tête magnétique servirait seulement à la lecture d'informations magnétiques et la tête graphique comporterait seulement l'ensemble de lecture d'informations graphiques 110. Quant à la tête ou connecteur d'enregistrement électronique, il n'est pas sensiblement modifié puisque, comme on le sait, il sert aussi bien aux opérations d'enregistrement qu'aux opérations de lecteur d'informations dans le circuit électronique de la carte.

Il faut souligner que la machine de personnalisation peut également servir à expertiser la carte et notamment le module électronique afin de s'assurer, par exemple, qu'aucun fil de connexion entre la puce et les plages externes n'est rompu. Pour cela, il suffit d'appliquer des signaux électriques convenables au module électronique à l'aide du connecteur 56.

La description précédente a envisagé le cas d'une machine servant à personnaliser une carte ou à authentifier une carte à l'unité ou à l'expertiser. C'est typiquement le cas de l'utilisation d'une telle machine au guichet d'un établissement bancaire ou d'un organisme émetteur de carte de crédit ou carte similaire. On comprend cependant que, compte tenu de la présence du circuit de commande 100 de l'ensemble de la machine, il est possible à l'aide du clavier 114 ou des moyens informatiques d'entrer successivement les informations correspondant à la personnalisation ou à l'authentification d'une série de cartes.

Selon un mode préféré de réalisation, une information unique est entrée pour chaque carte et c'est le circuit de traitement 100 qui met en oeuvre des programmes stockés dans la mémoire 102 qui élabore les instructions spécifiques à appliquer aux différents éléments d'enregistrement électronique, magnétique et graphique qui permettra l'enregistrement effectif des informations sous ces différentes formes. Dans ce mode de réalisation, celle-ci est associée à un chargeur de cartes qui assure un chargement automatique des cartes dans les moyens de guidage et de positionnement et qui en assure également automatiquement l'extraction ainsi que le tri des cartes jugées mauvaises.

## Revendications

1. Dispositif mixte de lecture et/ou d'écriture d'informations dans une carte (42) comprenant:
- un circuit de mémoire électronique (14), relié à des plages externes (12) de contact électrique, et au moins un de deux supports d'enregistrement d'informations respectivement sous forme magnétique (20, 22) et sous forme graphique (18),
- des moyens (43, 38, 40) pour supporter et immobiliser une carte (42) ;
- des moyens connecteurs (56) pour établir un contact électrique entre lesdits moyens connecteurs et lesdites plages externes (12) de la carte (42), lorsque celle-ci est en position de traitement, lesdits moyens connecteurs étant solidaires en translation desdits moyens pour supporter (43, 38, 40) selon la direction d'introduction de la carte ;
des deuxièmes moyens (60) pour lire et/ou écrire une information magnétique (64) sur ledit support d'enregistrement magnétique (20, 22), lesdits deuxièmes moyens (60) étant mobiles en translation par rapport auxdits moyens pour supporter (43, 38, 40) de telle manière que lesdits deuxièmes moyens décrivent sensiblement toute la longueur de la carte correspondant aux supports d'enregistrement magnétique ;
- des moyens (78, 82) pour provoquer le déplacement en translation desdits deuxièmes moyens (60) par rapport auxdits moyens pour supporter (43, 38, 40) ; et
- des moyens de traitement et de commande (100 à 108 et 112) reliés auxdits moyens connecteurs, auxdits deuxièmes moyens (60) et auxdits moyens de déplacement (78, 82) pour commander la lecture ou l'écriture d'informations dans ledit circuit électronique (14) de la carte (42) et/ou d'informations magnétiques sur le support spécifique (20, 22) et pour commander lesdits moyens de déplacement (82, 78), caractérisé par le faite que les deuxièmes moyens sont aptes à lire et/ou écrire une information graphique (63, 110) sur le corps de la carte (18); les moyens de traitement et de commande sont aptes à commander la lecture ou l'écriture d'informations graphiques sur la carte; et qu'ils sont en outre aptes, à partir d'une information unique, à élaborer les informations qui doivent être enregistrées sous forme électronique dans le circuit de mémoire électronique et simultanément enregistrées sous forme magnétique et sous forme graphique dans ledit support d'enregistrement magnétique et/ou le support d'enregistrement graphique.

2. Dispositif mixte selon la revendication 1, caractérisé en ce que lesdits moyens de supportage comportent un bâti fixe (30) et un ensemble de fixation (43) de la carte formant ensemble des moyens de guidage de la carte (42) jusqu'à ladite position de traitement, et en ce que lesdits deuxièmes moyens (60) comprennent une structure de supportage (62, 92) reliée auxdits moyens de déplacement (78, 82), des moyens de lecture et/ou d'écriture (63) d'informations graphiques montés sur ladite structure, et des moyens de lecture et/ou d'écriture d'informations magnétiques (64), lesdits deux moyens d'écriture et/ou de lecture étant disposés de part et d'autre de ladite carte (42) lorsque celle-ci est en position de traitement.

3. Dispositif mixte selon la revendication 2, caractérisé en ce que lesdits moyens d'écriture et/ou de lecture d'informations graphiques sont disposés du même côté, par rapport au corps de carte (42) que lesdits moyens connecteurs (56).

4. Dispositif mixte selon l'une quelconque des revendications 2 et 3, caractérisé en ce que lesdits moyens connecteurs (56) sont solidaires dudit bâti (30) et en ce que ledit ensemble de fixation (43) est mobile selon une direction perpendiculaire à la direction d'introduction de la carte entre une position de repos permettant l'introduction de la carte et une position de serrage pour immobiliser la carte en position de traitement.

5. Dispositif mixte selon l'une quelconque des revendications 2 à 4, caractérisé en ce qu'il comprend en outre une butée mécanique (52) solidaire dudit bâti (30) pour définir la position de traitement de ladite carte selon sa direction d'introduction.

6. Dispositif mixte selon la revendication 4, caractérisé en ce que ledit bâti (30) comporte des portions (38, 40) s'étendant parallèlement à la direction d'introduction de la carte pour définir avec ledit ensemble de fixation (43) en position de serrage, ladite position de traitement de la carte selon une direction perpendiculaire à la direction d'introduction de la carte.

7. Dispositif mixte selon l'une quelconque des revendications 1 à 6, caractérisé en ce que lesdits moyens d'enregistrement graphique (63) comprennent une tête d'impression à jets d'encre.

8. Dispositif mixte selon l'une quelconque des revendications 1 à 6, caractérisé en ce que lesdits moyens d'enregistrement graphique (63) comprennent une tête d'impression thermique.

9. Dispositif mixte selon l'une quelconque des revendications 7 et 8, caractérisé en ce que lesdits moyens d'enregistrement graphique comprennent deux têtes d'impression, chaque tête d'impression étant disposée d'un côté du corps de carte lorsque la carte (42) est en position de traitement.

## Patentansprüche

1. Mischvorrichtung für Lesen und/oder Schreiben von Informationen in eine Karte (42), umfassend:
- einen elektronischen Speicherschaltkreis (14), verbunden mit äußeren elektrischen Kontaktbelägen (12) und mindestens einem von zwei Informationsaufzeichnungsträgern in Magnetform (20, 22) bzw. graphischer Form (18);
- Mittel (43, 38, 40) zum Abstützen und Festlegen einer Karte (42);
- Verbindungsmittel (56) zum Etablieren eines elektrischen Kontakts zwischen den Verbindungsmitteln und den äußeren Belägen (12) der Karte (42), wenn sich diese in Bearbeitungsposition befindet, wobei die Verbindungsmittel translatorisch mit den Mitteln für das Abstützen (43, 38, 40) in Einführungsrichtung der Karte verbunden sind;
zweite Mittel (60) zum Lesen und/oder Schreiben einer magnetischen Information (64) auf den magnetischen Aufzeichnungsträger (20, 22), welche zweiten Mittel (60) translatorisch beweglich relativ zu den Mitteln zur Abstützung (43, 38, 40) derart sind, daß die zweiten Mittel im wesentlichen die gesamte Länge der Karte entsprechend dem magnetischen Aufzeichnungsträger überstreichen;
- Mittel (78, 82) zum Bewirken der translatorischen Verlagerung der zweiten Mittel (60) relativ zu den Mitteln zum Abstützen (43, 38, 40); und
- Bearbeitungs- und Steuermittel (100 bis 108 und 112), die mit den Verbindungsmitteln, den zweiten Mitteln (60) und den Verlagerungsmitteln (78, 82) verbunden sind, zum Steuern des Lesens oder Schreibens von Informationen in den elektronischen Schaltkreis (14) der Karte (42) und/oder von magnetischen Informationen auf den entsprechenden Träger (20, 22) und zum Steuern der Verlagerungsmittel (82, 78), dadurch gekennzeichnet, daß die zweiten Mittel ausgebildet sind, um eine graphische Information (63, 110) auf den Kartenkorpus (18) zu schreiben oder von ihm abzulesen, wobei die Verarbeitungs- und Steuermittel ausgebildet sind, um das Lesen oder Schreiben graphischer Informationen auf die Karte zu steuern, und daß sie im übrigen ausgebildet sind, um, ausgehend von einer unitären Information, die Informationen zu erstellen, die in elektronischer Form in der elektronischen Speicherschaltung und gleichzeitig in magnetischer Form und graphischer Form in dem magnetischen Aufzeichnungsträger und/oder graphischen Aufzeichnungsträger einzugeben sind.

2. Mischvorrichtung nach Anspruch 1, dadurch gekennzeichnet, daß die Abstützmittel ein stationäres Gestell (30) und eine Kartenhaltebaugruppe (43) umfassen, die gemeinsam Mittel zum Führen der Karte (42) bis zu der Bearbeitungsposition bilden, und daß die zweiten Mittel (60) eine Abstützstruktur (62, 92) umfassen, welche die Verlagerungsmittel (78, 82), die Lese- und/oder Schreibmittel (63) graphischer Informationen, auf der Struktur montiert, und Mittel zum Lesen und/oder Schreiben magnetischer Informationen (64) umfassen, welche zwei Schreib- und/oder Lesemittel beidseits der Karte (42) angeordnet sind, wenn diese in der Bearbeitungsposition ist.

3. Mischvorrichtung nach Anspruch 2, dadurch gekennzeichnet, daß die Mittel zum Schreiben und/oder Lesen graphischer Informationen auf derselben Seite relativ zum Kartenkorpus (42) wie die Verbindungsmittel (56) angeordnet sind.

4. Mischvorrichtung nach einem der Ansprüche 2 und 3, dadurch gekennzeichnet, daß die Verbindungsmittel (56) mit dem Gestell (30) verbunden sind, und daß die Haltebaugruppe (43) in einer Richtung senkrecht zur Eingaberichtung der Karte zwischen einer Ruheposition, die das Einführen der Karte ermöglicht, und einer Spannposition beweglich ist, in der die Karte in der Bearbeitungsposition festgehalten wird.

5. Mischvorrichtung nach einem der Ansprüche 2 bis 4, dadurch gekennzeichnet, daß sie ferner einen mechanischen Anschlag (52), verbunden mit dem Gestell (30), umfaßt, um die Bearbeitungsposition der Karte in ihrer Einführungsrichtung zu definieren.

6. Mischvorrichtung nach Anspruch 4, dadurch gekennzeichnet, daß das Gestell (30) Abschnitte (38, 40) umfaßt, die sich parallel zur Einführungsrichtung der Karte erstrecken, um mit der Festhaltebaugruppe (43) in der Spannposition die Bearbeitungsposition der Karte in einer Richtung senkrecht zur Einführungsrichtung der Karte zu definieren.

7. Mischvorrichtung nach einem der Ansprüche 1 bis 6, dadurch gekennzeichnet, daß die graphischen Aufzeichnungsmittel (63) einen Tintenstrahldruckkopf umfassen.

8. Mischvorrichtung nach einem der Ansprüche 1 bis 6, dadurch gekennzeichnet, daß die graphischen Aufzeichnungsmittel (63) einen Thermodruckkopf umfassen.

9. Mischvorrichtung nach einem der Ansprüche 7 und 8, dadurch gekennzeichnet, daß die graphischen Aufzeichnungsmittel zwei Druckköpfe umfassen, wobei jeder Druckkopf auf einer Seite des Kartenkorpus angeordnet ist, wenn die Karte (42) in der Bearbeitungsposition ist.

## Claims

1. A combination device for reading and/or writing information on a card (42) including:
an electronic memory circuit (14) connected to external electric contact tabs (12) and at least one of two information recording carriers respectively of magnetic form (20, 22) and of graphical form (18);
support means (43, 38, 40) for supporting and immobilizing a card (42);
connector means (56) for making electric contact between said conductor means and said external tabs (12) of the card (42), when it is in processing position, said connector means being fixed against translation relative to said support means (43, 38, 40) in relation to the card insertion direction;
second means (60) for reading and/or writing magnetic information (64) on said magnetic recording carrier (20, 22), said second means (60) being movable in translation relative to said support means (43, 38, 40) in such a manner that said second means traverse substantially the whole length of the card corresponding to the magnetic recording carriers;
moving means (78, 82) for moving said second means (60) relative to said support means (43, 38, 40); and
processing and control means (100 to 108 and 112) connected to said connector means, to said second means (60) and to said translating means (78, 82) to control the reading and/or writing of information in said electronic circuit (14) of the card (42) and/or of magnetic information on the specific carrier (20, 22) and to control said moving means (82, 78), the device being characterized in that the second means are capable of reading and/or writing graphical information (63, 110) on the body of the card (18); the processing and control means are capable of controlling the reading or writing of graphical information on the card; and they are further capable, from a single item, of generating information which must be recorded in electronic form in the electronic memory circuit and recorded simultaneously in magnetic form and in graphical form in said magnetic recording carrier and/or the graphical recording carrier.

2. A combination device according to claim 1, characterized in that said support means comprise a fixed frame (30) and an immobilizing unit (43) for the card, together forming guide means for guiding the card (42) up to said processing position, and in that said second means (60) comprise a support structure (62, 92) connected to said translating means (78, 82), to the means (63) reading and/or writing graphical information mounted on said structure, and to the means (64) for reading and/or writing magnetic information, said two means for writing and/or reading being located on the two sides of said card (42) when it is in processing position.

3. A combination device according to claim 2, characterized in that said means for writing and/or reading graphical information are located on the same side of the card (42) as said connector means (56).

4. A combination device according to claim 2 or 3, characterized in that said connector means (56) are fixed to said frame (30) and in that said immobilizing unit (43) is movable in a direction perpendicular to the card insertion direction between a rest position allowing the card to be inserted and a clamping position for immobilizing the card in the processing position.

5. A combination device according to any one of claims 2 to 4, characterized in that it further comprises a mechanical stop (52) fixed to said frame (30) for defining the processing position of said card in the insertion direction.

6. A combination device according to claim 4, characterized in that said frame has parts (38, 40) extending parallel to the card insertion direction and acting in conjunction with said immobilizing unit (43), when in the clamping position, to define said processing position of the card in a direction perpendicular to the direction of insertion of the card.

7. A combination device according to any one of claims 1 to 6, characterized in that said graphical recording means (63) comprise an ink-jet print head.

8. A combination device according to any one of claims 1 to 6, characterized in that said graphical recording means (63) comprise a thermal print head.

9. A combination device according to claim 7 or 8, characterized in that said graphical recording means comprise two print heads, both print heads being located on one side of the card when the card (42) is in the processing position.
